# EUROPÄISCHE PATENTSCHRIFT

(11) **EP 2 532 694 B1**
(45) Veröffentlichungstag und Bekanntmachung des Hinweises auf die Patenterteilung: **07.05.2014**
(21) Anmeldenummer: 11169184.6
(22) Anmeldetag: 08.06.2011
(51) Int. Cl.: C08G 59/40, C09D 163/00, C09J 163/00, C09D 5/00

(54) **Bonding system comprising an adhesive or sealant and an adhesion promoter**
Bonding system comprising an adhesive or sealant and a primer
Système de collage comprenant une matière de collage ou d'étanchéité et un agent adhésif

(43) Veröffentlichungstag der Anmeldung: 12.12.2012
(73) Patentinhaber: Sika Technology AG, 6340 Baar (CH)
(72) Erfinder: Burckhardt, Urs, 8049 Zürich (CH); Grimm, Judith, 8004 Zürich (CH); Corsaro, Antonio, 8105 Regensdorf (CH); Huck, Wolf-Rüdiger, 8044 Gockhausen (CH)
(74) Vertreter: Sika Patent Attorneys

(56) Entgegenhaltungen:
- WO-A1-01/77202
- US-A- 4 480 083
- US-A1- 2010 297 357
- US-A1- 2011 027 591

## Beschreibung

### Technisches Gebiet

Die Erfindung betrifft das Gebiet der elastischen Kleb- und Dichtstoffe sowie der Haftvermittler für solche Kleb- und Dichtstoffe.

### Stand der Technik

Kleb- und Dichtstoffe werden zur Verklebung und Abdichtung von vielerlei Materialien eingesetzt. Um die Haftung von Kleb- und Dichtstoffen auf unterschiedlichen Untergründen zu verbessern werden oftmals Haftvermittlerzusammensetzungen, welche als Voranstriche auf dem Untergrund bzw. Substrat aufgetragen werden, eingesetzt.

Solche Haftvermittlerzusammensetzungen enthalten als Lösemittel typischerweise flüchtige organische Verbindungen (VOC), welche bei der Applikation verdampfen und aus Gründen des Umwelt-, Gesundheits- und Arbeitsschutzes nachteilig sind. Es wird deshalb versucht, lösemittelhaltige Haftvermittlerzusammensetzungen durch wässrige zu ersetzen. Wässrige Haftvermittlerzusammensetzungen neigen allerdings dazu, unter feuchtwarmen Bedingungen, beispielsweise bei Kataplasma-Lagerung, ihre Haftung im Klebeverbund wieder zu verlieren, was zum Versagen des gesamten Klebesystems führt. Eine wässrige Haftvermittlerzusammensetzung mit vergleichsweise guter Beständigkeit unter feuchtwarmen Bedingungen ist beispielsweise in WO 2008/037780 beschrieben. Sie stellt ein Zweikomponentensystem bestehend aus einer Epoxidharzdispersion und einem Aminhärter dar. Bei längerer Kataplasma-Lagerung zeigt jedoch auch diese Haftvermittlerzusammensetzungen Haftverlust.

### Darstellung der Erfindung

Aufgabe der vorliegenden Erfindung ist es daher, ein Klebesystem bereitzustellen, dessen Haftvermittlerzusammensetzung keine oder nur unwesentlich flüchtigen organischen Verbindungen freisetzt, wobei das System gleichzeitig nicht zu einem Verlust der Haftung unter feuchtwarmen Bedingungen führt.

Diese Aufgabe wird durch ein erfindungsgemässes Klebesystem nach Anspruch 1 gelöst.

Überraschenderweise wurde gefunden, dass das Vorhandensein einer Verbindung **V** in einem Kleb- oder Dichtstoff die Beständigkeit der untenliegenden Haftvermittlerzusammensetzung gegenüber feuchtwarmen Bedingungen deutlich verbessert. Dadurch ist die Beständigkeit des Klebesystems unter feuchtwarmen Bedingungen gewährleistet. Zudem kann das Einsatzgebiet bestehender Haftvermittlerzusammensetzungen, welche bei feuchtwarmen Bedingungen in der Regel einen Haftverlust erleiden, erweitert werden.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft ein Klebesystem umfassend eine Haftvermittlerzusammensetzung enthaltend
- mindestens eine wässrige Dispersion eines Epoxid-Festharzes; und
- mindestens ein Polyamin;
   sowie
   einen Kleb- oder Dichtstoff enthaltend
- mindestens eine Verbindung **V** in freier oder hydrolytisch freisetzbarer Form, welche mit dem Polyamin eine Kondensationsreaktion eingehen kann.

Mit "Poly" beginnende Substanznamen wie Polyamin oder Polyisocyanat bezeichnen im vorliegenden Dokument Substanzen, die formal zwei oder mehr der in ihrem Namen vorkommenden funktionellen Gruppen pro Molekül enthalten.

Entsprechend werden im vorliegenden Dokument als "Polyamin" Verbindungen verstanden, welche zwei oder mehr Aminogruppen aufweisen.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem so genannten Polyisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Als "Kataplasma-Lagerung" wird hier die Lagerung eines Probekörpers bei einer Temperatur von 70°C und einer relativen Luftfeuchtigkeit von 100% bezeichnet.

Unter "Molekulargewicht" versteht man im vorliegenden Dokument stets das Molekulargewichtsmittel Mₙ (Zahlenmittel).

Beim Epoxid-Festharz der wässrigen Dispersion handelt es sich insbesondere um ein Epoxid-Festharz der Formel (I).

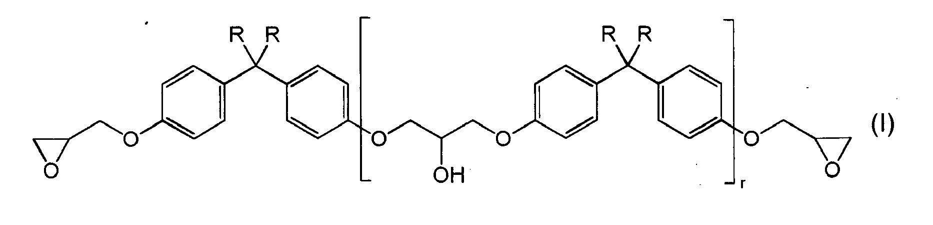

Hierbei stehen die Substituenten R unabhängig voneinander entweder für ein Wasserstoffatom oder eine Methylgruppe. Weiterhin steht der Index r für einen Wert von > 1, insbesondere von ≥ 1.5. Bevorzugt steht r für einen Wert von 2 bis 12.

Typischerweise weist ein Epoxid-Festharz eine Glasübergangstemperatur auf, welche oberhalb der Raumtemperatur von etwa 23°C liegt. Epoxid-Festharze lassen sich somit bei Raumtemperatur zu schüttfähigen Pulvern zerkleinern.

Derartige Epoxid-Festharze sind als solche oder bereits in dispergierter Form beispielsweise kommerziell erhältlich von Dow Chemical Company, USA, von Huntsman International LLC, USA, oder von Hexion Specialty Chemicals Inc, USA.

Weiterhin geeignet sind beispielsweise Epoxid-Festharze, welche zumindest teilweise N-Glycidylgruppen an Stelle von Glycidylethergruppen aufweisen, sowie Epoxidharze auf Basis von aliphatischen Glycidylethern.

Ebenfalls eignen sich Epoxid-Festharze aus der Gruppe der Phenolharze, insbesondere Phenol- oder Kresolnovolake.

Gegebenenfalls enthält die wässrige Dispersion eines Epoxid-Festharzes weitere Bestandteile, wie beispielsweise Epoxid-Flüssigharze, Emulgatoren, Co-Emulgatoren, Entschäumer, Biocide, Pigmente, Füllstoffe, Reaktivverdünner oder Katalysatoren.

Die wässrige Dispersion eines Epoxid-Festharzes weist vorzugsweise einen Gehalt an Epoxid-Festharz von 30 bis 80 Gew.-%, insbesondere 50 bis 70 Gew.-%, auf. Entsprechend weist die wässrige Dispersion eines Epoxidharzes insbesondere etwa 20 bis 70 Gew.-% Wasser auf.

Die mittlere Teilchengrösse der dispergierten Partikel aus Epoxid-Festharz in der Dispersion liegt insbesondere im Bereich von 0.05 bis 20 µm, insbesondere 0.1 bis 10 µm, besonders bevorzugt 0.2 bis 5 µm.

Beispielweise sind geeignete wässrige Dispersionen eines Epoxid-Festharzes unter dem Handelsnamen Waterpoxy^{®} 1422 kommerziell erhältlich von Cognis oder unter dem Handelsnamen Ancarez™ AR555 Waterborne Epoxy Resin von Air Products.

Der Anteil der wässrigen Dispersion eines Epoxid-Festharzes beträgt vorzugsweise 30 bis 99 Gew.-%, insbesondere 40 bis 80 Gew.-%, bezogen auf die gesamte Haftvermittlerzusammensetzung.

Weiterhin umfasst die erfindungsgemässe Haftvermittlerzusammensetzung mindestens ein Polyamin.

Geeignete Polyamine sind beispielsweise beschrieben in der europäischen Patentanmeldung EP09178262.3, deren Inhalt hiermit durch Bezugnahme eingeschlossen wird.

Vorzugsweise ist das Polyamin ein Reaktionsprodukt, insbesondere ein Polyamidoamin oder ein Epoxidharz/Polyamin-Additionsprodukt.

Bevorzugt handelt es sich beim Polyamin um ein Polyamidoamin. Beispielsweise sind dies Kondensationsprodukte von Carbonsäuren mit Polyaminen, beispielsweise einer Fettsäure mit einem Polyalkylenamin.

Besonders geeignete Polyamine sind Additionsprodukte von Epoxidharzen und Polyaminen. Derartige Additionsprodukte lassen sich beispielsweise aus einer Vielzahl möglicher dem Fachmann bekannter Polyamine und Epoxidharzen, insbesondere Bisphenol A-Diglycidylether, erhalten. Hierfür bevorzugte Polyamine sind Ethylendiamin, Isophorondiamin, 2,2,4- und 2,4,4-Trimethylhexamethylendiamin, 1,3-Xylylendiamin, Polyalkylenamine wie Polyethylenamine oder Polyoxyalkylendiamine oder -triamine, insbesondere wie sie unter dem Handelsnamen Jeffamine^{®} von Huntsman erhältlich sind. Bevorzugt handelt es sich beim Reaktionsprodukt um dasjenige eines Diglycidylethers von Bisphenol A und/oder Bisphenol F mit einem Polyoxyalkylendiamin oder Polyoxyalkylentriamin. Ein besonders geeignetes Additionsprodukt ist dasjenige, welches in EP 0567831 als Bis(diamin)-di-epoxidaddukt beschrieben ist.

Es ist durchaus möglich und kann sogar von Vorteil sein, eine Mischung verschiedener Polyamine in der erfindungsgemässen Haftvermittlerzusammensetzung einzusetzen. Gegebenenfalls können auch Mischungen von Polyaminen mit Mercaptogruppen aufweisenden Verbindungen eingesetzt werden.

Der Anteil des Polyamins ist insbesondere so gewählt, dass in der Haftvermittlerzusammensetzung ein Verhältnis von Aminogruppen zu Epoxidgruppen im Bereich von 0.1:1 bis 1:1 zustande kommt.

Vorzugsweise beträgt der Anteil des Polyamins 1 bis 40 Gew.-%, insbesondere 5 bis 20 Gew.-%, bezogen auf die gesamte Haftvermittlerzusammensetzung.

Die Haftvermittlerzusammensetzung des erfindungsgemässen Klebesystems enthält bevorzugt weitere Inhaltsstoffe, wie sie in Haftvermittlerzusammensetzungen üblich und beispielsweise in WO 2008/037780 beschrieben sind, insbesondere Verbindungen, wie sie darin beschrieben sind als Epoxysilan ES oder ESx, Aminosilane AS oder ASx oder Mercaptosilane MS.

Besonders bevorzugt enthält die Haftvermittlerzusammensetzung Silane, gegebenenfalls zumindest teilweise in Form ihrer Siloxane, sowie Pigmente. Bevorzugte Silane sind Epoxysilane, insbesondere 3-Glycidoxypropylsilane, und Aminosilane, insbesondere 3-Aminopropylsilane und N-(2-Aminoethyl)-3-aminopropylsilane, Addukte aus Epoxysilanen und Aminosilanen, sowie Mercaptosilane, insbesondere 3-Mercaptopropylsilane.

Bevorzugte Pigmente sind Eisenpigmente und insbesondere Russ.

Die beschriebene Haftvermittlerzusammensetzung wird insbesondere als Zweikomponentensystem eingesetzt, wobei die wässrige Dispersion des Epoxid-Festharzes in der ersten Komponente und das Polyamin in der zweiten Komponente enthalten sind.

Bevorzugt ist die Haftvermittlerzusammensetzung eine zweikomponentige Haftvermittlerzusammensetzung bestehend aus
einer ersten Komponente **K1** enthaltend
- mindestens eine wässrige Dispersion eines Epoxid-Festharzes;
   sowie
   einer zweiten Komponente **K2** enthaltend
- mindestens ein Polyamin.

Die einzelnen Komponenten der Haftvermittlerzusammensetzung werden nach der Herstellung typischerweise getrennt voneinander in dichte Verpackungen verpackt. Die einzelnen Komponenten sind getrennt voneinander lagerstabil. Die Lagerung der erfindungsgemässen Haftvermittlerzusammensetzung erfolgt insbesondere bei Temperaturen im Bereich von von 5 bis 30°C. Dies gewährleistet die Stabilität der wässrigen Dispersion des Epoxid-Festharzes.

Weiterhin umfasst das erfindungsgemässe Klebesystem mindestens einen Kleb- oder Dichtstoff enthaltend mindestens eine Verbindung V in freier oder hydrolytisch freisetzbarer Form, welche mit dem Polyamin eine Kondensationsreaktion eingehen kann.

Als Kleb- oder Dichtstoff kann grundsätzlich jeder übliche Kleb- oder Dichtstoff verwendet werden. Insbesondere handelt es sich dabei um einen feuchtigkeitshärtenden Kleb- oder Dichtstoff.

Geeignete Kleb- und Dichtstoffe sind insbesondere Polyurethankleb- und -dichtstoffe, insbesondere solche, welche Isocyanatgruppen aufweisende Polyurethanpolymere enthalten.

Weiterhin eignet sich die erfindungsgemässe Haftvermittlerzusammensetzung insbesondere auch für silanvernetzende Kleb- und Dichtstoffe.

Besonders geeignet ist die erfindungsgemässe Haftvermittlerzusammensetzung für elastische feuchtigkeitshärtende Klebstoffe, wie sie unter den Produktelinien Sikaflex^{®} und SikaBond^{®} von Sika Schweiz AG kommerziell vertrieben werden.

Bevorzugte Kleb- und Dichtstoffe sind Polyurethankleb- und Dichtstoffe, welche Isocyanatgruppen aufweisende Polyurethanpolymere enthalten, sowie silanvernetzende Kleb- und Dichtstoffe, wobei beide Typen insbesondere bei Raumtemperatur (23°C) applizierbar sind und auch bei Raumtemperatur aushärten können.

Als geeignete Klebstoffe auf Basis von Isocyanatgruppen terminierten Polyurethanpolymeren werden ebenfalls zweikomponentige Polyurethanklebstoffe verstanden, deren erste Komponente ein Amin- oder ein Polyol und deren zweite Komponente ein Isocyanatgruppen aufweisendes Polyurethanpolymer oder ein Polyisocyanat umfasst. Beispiele für zweikomponentige, bei Raumtemperatur härtende Polyurethanklebstoffe sind solche aus der SikaForce^{®}-Produktlinie, wie sie kommerziell erhältlich sind von Sika Schweiz AG.

Als geeignete Klebstoffe auf Basis von Isocyanatgruppen terminierten Polymeren sind weiterhin reaktive Polyurethan-Heissschmelzklebstoffe, die ein thermoplastisches Polymer sowie ein Isocyanatgruppen terminiertes Polymer oder ein thermoplastisches Isocyanatgruppen terminiertes Polymer enthalten. Solche reaktiven Polyurethan-Heissschmelzklebstoffe werden aufgeschmolzen und verfestigen sich einerseits beim Abkühlen und vernetzen andererseits über eine Reaktion mit Luftfeuchtigkeit. Beispielsweise sind geeignete reaktive Polyurethan-Heissschmelzklebstoffe unter dem Namen SikaMelt^{®} kommerziell erhältlich bei Sika Schweiz AG.

Weiterhin umfasst der Kleb- oder Dichtstoff des erfindungsgemässen Klebesystems mindestens eine Verbindung **V** in freier oder hydrolytisch freisetzbarer Form, welche mit dem Polyamin eine Kondensationsreaktion eingehen kann.

Insbesondere handelt es sich bei der Verbindung **V** um eine Carbonylverbindung. Als Carbonylverbindung bevorzugt sind Aldehyde, β-Diketone, β -Ketoester sowie β-Ketoamide.

Der Anteil der Verbindung **V** beträgt vorzugsweise 0.2 bis 20 Gew.-%, insbesondere 0.5 bis 10 Gew.-%, bezogen auf den Kleb- oder Dichtstoff.

Geeignete Aldehyde sind einerseits bei Raumtemperatur flüssige Aldehyde, insbesondere Propanal, 2-Methylpropanal, Butanal, 2-Methylbutanal, 2-Ethylbutanal, Pentanal, Pivalaldehyd, 2-Methylpentanal, 3-Methylpentanal, 4-Methylpentanal, 2,3-Dimethylpentanal, Hexanal, 2-Ethyl-hexanal, Heptanal, Octanal, Nonanal, Decanal, Undecanal, 2-Methyl-undecanal, Dodecanal, Methoxyacetaldehyd, Cyclopropancarboxaldehyd, Cyclopentancarboxaldehyd, Cyclohexancarboxaldehyd, 2,2-Dimethyl-3-phenylpropanal; 1-Naphthaldehyd, Benzaldehyd oder substituierte Benzaldehyde, insbesondere die isomeren Tolualdehyde, Salicylaldehyd und m-Phenoxy-benzaldehyd; und Zimtaldehyd.

Als Aldehyd insbesondere geeignet sind andererseits Aldehyde der Formel (II).

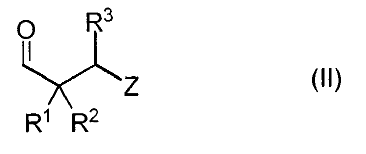

Dabei stehen R¹ und R² entweder unabhängig voneinander jeweils für einen einwertigen Kohlenwasserstoffrest mit 1 bis 12 C-Atomen, oder zusammen für einen zweiwertigen Kohlenwasserstoffrest mit 4 bis 12 C-Atomen, der Teil eines, gegebenenfalls substituierten, carbocyclischen Rings mit 5 bis 8, bevorzugt 6, C-Atomen ist. Bevorzugt stehen R¹ und R² jeweils für einen Methylrest.

R³ steht weiterhin für ein Wasserstoffatom oder für eine Arylalkyl- oder Cycloalkyl- oder Alkylgruppe mit 1 bis 12 C-Atomen, insbesondere für ein Wasserstoffatom.

Z steht für eine Ester-, Ether-, tertiäre Amino- oder Amidogruppe mit bis zu 31 C-Atomen, wobei diese gegebenenfalls zusätzliche Ethersauerstoffatome aufweisen. Bevorzugt steht Z für einen Rest der Formel (III) oder (IV),

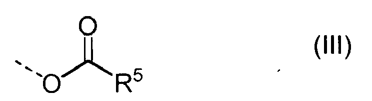

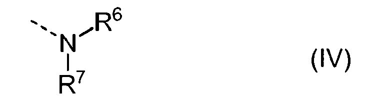

R⁵ steht dabei entweder für ein Wasserstoffatom oder für einen linearen oder verzweigten Alkylrest mit 1 bis 30 C-Atomen, gegebenenfalls mit cyclischen Anteilen und gegebenenfalls mit mindestens einem Heteroatom, insbesondere Sauerstoff in der Form von Ether-, Carbonyl- oder Ester-Gruppen.

Weiterhin kann R⁵ für einen einfach oder mehrfach ungesättigten, linearen oder verzweigten Kohlenwasserstoffrest mit 5 bis 30 C-Atomen stehen oder für einen, gegebenenfalls substituierten, aromatischen oder heteroaromatischen 5- oder 6-gliedrigen Ring.

Bevorzugt steht R⁵ für einen linearen oder verzweigten Alkylrest mit 6 bis 30, insbesondere mit 11 bis 30, C-Atomen, gegebenenfalls mit cyclischen Anteilen und gegebenenfalls mit mindestens einem Heteroatom, oder für einen einfach oder mehrfach ungesättigten, linearen oder verzweigten Kohlenwasserstoffrest mit 6 bis 30, insbesondere mit 11 bis 30, C-Atomen.

R⁶ und R⁷ stehen jeweils unabhängig voneinander für ein Wasserstoffatom, eine Alkyl-, Cycloalkyl-, Aryl- oder Arylalkylgruppe mit 1 bis 12 C-Atomen, welche gegebenenfalls Ethergruppen oder Halogenatome aufweist oder zusammen für einen zweiwertigen Kohlenwasserstoffrest, der Teil eines, gegebenenfalls substituierten, carbocylischen Rings mit 5 bis 8, bevorzugt 5 oder 6, C-Atomen ist

Bevorzugt stehen R⁶ und R⁷ jeweils unabhängig voneinander für eine Methyl-, Ethyl-, Propyl-, Isopropyl-, Butyl-, Isobutyl-, 2-Ethylhexyl-, Cyclohexyl-, Benzyl- oder Alkoxyethylgruppe, oder sie bilden zusammen - unter Einbezug des Stickstoffatoms - einen Ring, insbesondere einen Pyrrolidin-, Piperidin-, Morpholin- oder N-Alkylpiperazinring, wobei dieser Ring gegebenenfalls substituiert ist. Besonders bevorzugt stehen R⁶ und R⁷ jeweils unabhängig voneinander für eine Benzyl- oder Methoxyethylgruppe, oder bilden zusammen unter Einbezug des Stickstoffatoms einen Morpholinring.

Bevorzugt sind Aldehyde der Formel (II), welche bei Raumtemperatur flüssig sind.

Aldehyde der Formel (II), welche als Rest Z einen Rest der Formel (III) aufweisen, stellen Ester von aliphatischen, cycloaliphatischen oder arylaliphatischen 2,2-disubstituierten 3-Hydroxyaldehyden, wie insbesondere 2,2-Dimethyl-3-hydroxypropanal, mit geeigneten Carbonsäuren dar, wobei als Carbonsäuren insbesondere die Folgenden geeignet sind: gesättigte aliphatische Carbonsäuren, wie insbesondere Ameisensäure, Essigsäure, Propionsäure, Buttersäure, Isobuttersäure, Valeriansäure, Capronsäure, 2-Ethylcapronsäure, Oenanthsäure, Caprylsäure, Pelargonsäure, Caprinsäure, Undecansäure, Laurinsäure, Tridecansäure, Myristinsäure, Pentadecansäure, Palmitinsäure, Margarinsäure, Stearinsäure, Nonadecansäure, Arachinsäure; einfach ungesättigte aliphatische Carbonsäuren wie Palmitoleinsäure, Ölsäure, Erucasäure; mehrfach ungesättigte aliphatische Carbonsäuren wie Linolsäure, Linolensäure, Elaeostearinsäure, Arachidonsäure; cycloaliphatische Carbonsäuren wie Cyclohexancarbonsäure, arylaliphatische Carbonsäuren wie Phenylessigsäure; aromatische Carbonsäuren wie Benzoesäure, Naphthoesäure, Toluylsäure, Anissäure; Isomere dieser Säuren; Fettsäuregemische aus der technischen Verseifung von natürlichen Ölen und Fetten wie beispielsweise Rapsöl, Sonnenblumenöl, Leinöl, Ölbaumöl, Kokosnussöl, Ölpalmkernöl und Ölpalmöl; sowie Dicarbonsäuremonoalkyl- und -arylester, wie sie aus der einfachen Veresterung von Dicarbonsäuren wie Bernsteinsäure, Glutarsäure, Adipinsäure, Pimelinsäure, Korksäure, Azelainsäure, Sebacinsäure, 1,12-Dodecandisäure, Maleinsäure, Fumarsäure, Hexahydrophthalsäure, Hexahydroisophthalsäure, Hexahydroterephthalsäure, 3,6,9-Trioxaundecandisäure und ähnliche Derivate von Polyethylenglykol, mit Alkoholen wie Methanol, Ethanol, Propanol, Butanol, höheren Homologen und Isomeren dieser Alkohole erhalten werden. Bevorzugt sind Carbonsäuren mit mindestens 7 C-Atomen, insbesondere solche mit 12 bis 31 C-Atomen, insbesondere Laurinsäure, Myristinsäure, Palmitinsäure, Stearinsäure und Ölsäure. Besonders bevorzugt ist Laurinsäure.

Bevorzugt ist der Aldehyd ausgewählt aus der Gruppe bestehend aus 2-Ethylbutanal, Pentanal, Pivalaldehyd, 2-Methylpentanal, 3-Methylpentanal, 4-Methylpentanal, 2,3-Dimethylpentanal, Hexanal, 2-Ethyl-hexanal, Heptanal, Octanal, Methoxyacetaldehyd, 2,2-Dimethyl-3-phenylpropanal, Benzaldehyd, 1-Naphthaldehyd, Salicylaldehyd und Aldehyde der Formel (II), insbesondere 3-Acetoxy-2,2-dimethylpropanal, 2,2-Dimethyl-3-lauroyloxypropanal, 2,2-Dimethyl-3-(N-morpholino)-propanal und 2,2-Dimethyl-3-bis-(methoxyethyl)-amino-propanal.

Besonders bevorzugt ist der Aldehyd ausgewählt aus der Gruppe bestehend aus Benzaldehyd, Salicylaldehyd, 2,2-Dimethyl-3-phenylpropanal, 3-Acetoxy-2,2-dimethylpropanal, 2,2-Dimethyl-3-lauroyloxypropanal und 2,2-Dimethyl-3-(N-morpholino)-propanal.

Als Aldehyd speziell bevorzugt sind Aldehyde der Formel (II), welche als Rest Z einen Rest der Formel (III) aufweisen, worin R⁵ 11 bis 30 C-Atome, insbesondere 11 bis 20 C-Atome, aufweist. Meist bevorzugt ist 2,2-Dimethyl-3-lauroyloxypropanal.

Bei diesen Aldehyden handelt es sich um geruchsfreie Substanzen. Unter einer "geruchsfreien" Substanz wird eine Substanz verstanden, die für die meisten menschlichen Individuen nicht riechbar ist, die also keinen wahrnehmbaren Geruch aufweist. Beim Einsatz derartiger Aldehyde sind Kleb- und Dichtstoffe zugänglich, welche geruchsfrei sind und keine VOC freisetzen.

Als β-Diketon eignen sich insbesondere solche der Formel (V)

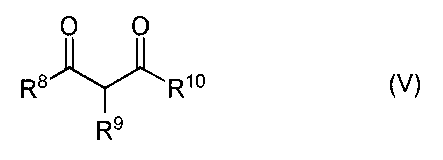

Einerseits stehen dabei R⁸ und R¹⁰ unabhängig voneinander jeweils für eine Alkyl-, Cycloalkyl-, Aryl- oder Arylalkylgruppe mit 1 bis 12 C-Atomen, welche gegebenenfalls Ethergruppen oder Halogenatome aufweist, und R⁹ steht für ein Wasserstoffatom oder für eine Alkyl-, Cycloalkyl-, Aryl- oder Arylalkylgruppe mit 1 bis 12 C-Atomen.

Andererseits stehen R⁸ und R⁹ zusammen für einen zweiwertigen Kohlenwasserstoffrest, der Teil eines, gegebenenfalls substituierten, carbocylischen Rings mit 5 bis 8, bevorzugt 5 oder 6, C-Atomen ist, und R¹⁰ steht für eine Alkyl-, Cycloalkyl-, Aryl- oder Arylalkylgruppe mit 1 bis 12 C-Atomen, welche gegebenenfalls Ethergruppen oder Halogenatome aufweist.

Bevorzugte β-Diketone der Formel (V) sind insbesondere ausgewählt aus der Gruppe bestehend aus 2,4-Pentandion, in 3-Stellung alkyliertes 2,4-Pentandion, also insbesondere 3-Methyl-, 3-Ethyl-, 3-Propyl-, 3-Isopropyl-, 3-Butyl-, 3-tert.Butyl-, 3-Cyclohexyl- und 3-Phenyl-2,4-pentandion, 1,1,1-Trifluoro-2,4-pentandion, 1,1,1,5,5,5-Hexafluoro-2,4-pentandion, 3,5-Heptandion, 3,5-Octandion, 2,4-Octandion, 6-Methyl-3,5-heptandion, 2,2,6,6-Tetramethyl-3,5-heptandion, 2,2,4,6,6-Pentamethyl-3,5-heptandion, 1-Phenyl-1,3-butandion, 2-Acetylcyclopentanon, 2-Acetylcyclohexanon, 2-Benzoyl-cyclopentanon und 2-Benzoyl-cyclohexanon.

Besonders bevorzugt ist 2,4-Pentandion.

Als β-Ketoester geeignet sind insbesondere β-Ketoester der Formel (VI).

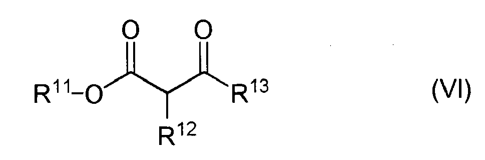

R¹¹ steht für eine lineare oder verzweigte Alkylgruppe mit 1 bis 6 C-Atomen, vorzugsweise für eine tert.-Butylgruppe.

R¹² und R¹³ stehen unabhängig voneinander jeweils für ein Wasserstoffatom, eine Alkyl-, Cycloalkyl-, Aryl- oder Arylalkylgruppe mit 1 bis 12 C-Atomen, welche gegebenenfalls Ethergruppen oder Halogenatome aufweist oder zusammen für einen zweiwertigen Kohlenwasserstoffrest, der Teil eines, gegebenenfalls substituierten, carbocylischen Rings mit 5 bis 8, bevorzugt 5 oder 6, C-Atomen ist. Insbesondere steht R¹² für ein Wasserstoffatom und R¹³ für eine Methylgruppe.

Als β-Ketoamide eignen sich insbesondere β-Ketoamide der Formel (VII).

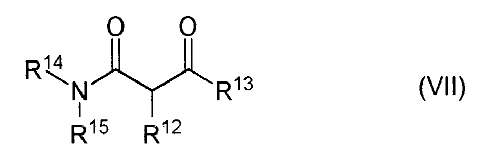

R¹² und R¹³ entsprechen dabei unabhängig den Resten, wie sie vorhergehend bei β-Ketoestern der Formel (VI) worden sind.

R¹⁴ und R¹⁵ stehen jeweils unabhängig voneinander für ein Wasserstoffatom, eine Alkyl-, Cycloalkyl-, Aryl- oder Arylalkylgruppe mit 1 bis 12 C-Atomen, welche gegebenenfalls Ethergruppen oder Halogenatome aufweist oder zusammen für einen zweiwertigen Kohlenwasserstoffrest, der Teil eines, gegebenenfalls substituierten, carbocylischen Rings mit 5 bis 8, bevorzugt 5 oder 6, C-Atomen ist

Bei der Verbindung **V** kann es sich auch um eine mehrfunktionelle Verbindung handeln, welche zwei oder mehr der in den vorhergehend beschriebenen Carbonylverbindung enthaltenen Carbonylgruppen aufweist, wobei diese Carbonylgruppen innerhalb eines Moleküls nicht zwingend identisch sein müssen. Beispielsweise eignet sich als Verbindung **V** ein Dialdehyd wie Terephthalaldehyd oder ein Polyol, dessen Hydroxylgruppen vollständig acetoacetyliert sind.

Die Verbindung **V** kann statt in freier Form auch in hydrolytisch freisetzbarer Form im Kleb- oder Dichtstoff enthalten sein.

Als Verbindungen, welche eine Verbindung **V** nach der Hydrolyse freisetzen, eignen sich insbesondere Aldimine, Enamine oder Oxazolidine.

Bevorzugt handelt es sich bei der Verbindung **V** in hydrolytisch freisetzbarer Form um ein Aldimin der Formel (VIII),

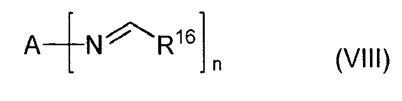

Dabei steht n für einen Wert von 1 bis 4, insbesondere für 2 oder 3.

A steht für einen n-wertigen Kohlenwasserstoffrest mit 2 bis 30 C-Atomen, welcher gegebenenfalls mindestens ein Heteroatom, insbesondere in der Form von Ether-Sauerstoff oder tertiärem Amin-Stickstoff, enthält.

Insbesondere steht A für einen Rest eines Amins nach Entfernung von n Aminogruppen. Bevorzugte Amine sind dabei ausgewählt aus der Gruppe bestehend aus 1,6-Hexamethylendiamin, 1,5-Diamino-2-methylpentan, 1,3-Pentandiamin, Isophorondiamin, 2,2,4- und 2,4,4-Trimethylhexamethylendiamin, 1,3-Xylylendiamin, 1,3-Bis-(aminomethyl)cyclohexan, Bis-(4-aminocyclohexyl)-methan, Bis-(4-amino-3-methylcyclohexyl)-methan, 3(4),8(9)-Bis-(aminomethyl)-tricyclo[5.2.1.0^{2,6}]decan, 1,2-, 1,3- und 1,4-Diaminocyclohexan, 1,4-Diamino-2,2,6-trimethylcyclohexan, 3,6-Dioxaoctan-1,8-diamin, 4,7-Dioxadecan-1,10-diamin, 4-Aminomethyl-1,8-octandiamin, Polyoxyalkylen-Polyaminen mit zwei oder drei Aminogruppen und einem Molekulargewicht bis 600 g/mol, insbesondere die unter dem Handelsnamen Jeffamine^{®} erhältlichen Typen D-230, D-400 und T-403 von Huntsman und dazu analoge Verbindungen von BASF oder Nitroil; 1,3- und 1,4-Phenylendiamin, 2,4- und 2,6-Toluylendiamin, 4,4'-, 2,4'- und 2,2'-Diaminodiphenylmethan, 3,3'-Dichlor-4,4'-diaminodiphenylmethan und Mischungen der genannten Amine.

R¹⁶ steht für einen Rest eines Aldehyds, wie er vorhergehend beschrieben worden ist, nach Entfernung der Aldehydgruppe.

Weitere geeignete Aldimine sind beispielsweise als Polyaldimine PA beschrieben in WO 2010/112537. Als Aldimin ebenfalls geeignet sind kommerzielle Aldimine, wie beispielsweise Vestamin^{®} A-139 (von Evonik).

Weiterhin bevorzugt handelt es sich bei der Verbindung **V** in hydrolytisch freisetzbarer Form um ein Enamin. Ein solches Enamin ist insbesondere erhältlich aus der Kondensationsreaktion von einem mindestens eine sekundäre Aminogruppe aufweisenden Amin mit mindestens einem Aldehyd, welcher in α-Stellung zur Carbonylgruppe mindestens ein Wasserstoffatom aufweist und damit enolisierbar ist, insbesondere Acetaldehyd, Propanal, 2-Methylpropanal, Butanal, 2-Methylbutanal, 2-Ethylbutanal, Pentanal, 2-Methylpentanal, 3-Methylpentanal, 4-Methylpentanal, 2,3-Dimethylpentanal, Hexanal, 2-Ethylhexanal, Heptanal, Octanal, Nonanal, Decanal, Undecanal, 2-Methylundecanal, Dodecanal, Methoxyacetaldehyd, Cyclopropancarboxaldehyd, Cyclopentancarboxaldehyd, Cyclohexancarboxaldehyd oder Diphenylacetaldehyd. Als mindestens eine sekundäre Aminogruppe aufweisendes Amin geeignet sind einerseits Amine mit mindestens zwei sekundären Aminogruppen, insbesondere Piperazin, 2,5- und 2,6-Dimethylpiperazin, 2,3,5,6-Tetramethylpiperazin, 1,7-Dioxa-4,10-diazacyclododecan, N,N'-Dibutylethylendiamin; N,N'-Di-tert.butyl-ethylendiamin, N,N'-Dimethyl-1,6-hexandiamin, N,N'-Diethyl-1,6-hexandiamin, N,N'-Dimethyl-diethylentriamin, N,N'-Dimethyl-dipropylentriamin, 1-(1-Methylethyl-amino)-3-(1-methylethyl-aminomethyl)-3,5,5-trimethylcyclohexan (Jefflink^{®} 754 von Huntsman), N4-Cyclohexyl-2-methyl-N2-(2-methylpropyl)-2,4-pentandiamin, N,N'-Dialkyl-1,3-xylylendiamin, Bis-(4-(N-alkylamino)-cyclohexyl)-methan, 4,4'-Trimethylendipiperidin und N-alkylierte Polyetheramine, beispielsweise Jeffamine^{®}-SD-231 (von Huntsman); weiterhin Amine mit einer Hydroxylgruppe und einer sekundären Aminogruppe, insbesondere N-(2-Hydroxyethyl)-piperazin, 4-Hydroxy-piperidin, sowie monoalkoxylierte primäre Monoamine, wie insbesondere N-Methyl-ethanolamin, N-Ethyl-ethanolamin, N-Butylethanolamin und N-Butyl-isopropanolamin; weiterhin Amine mit einer Mercaptogruppe und einer sekundären Aminogruppe, insbesondere N-(2-Mercaptoethyl)-piperazin, 4-Mercapto-piperidin und 2-Mercaptoethyl-butylamin.

Weiterhin bevorzugt handelt es sich bei der Verbindung **V** in hydrolytisch freisetzbarer Form um ein Oxazolidin. Ein solches Oxazolidin ist insbesondere erhältlich aus der Kondensationsreaktion von mindestens einem Hydroxyamin, in welchem die Hydroxyl- und die primäre oder sekundäre Aminogruppe durch einen, gegebenenfalls substituierten, Ethylen- oder Propylenrest getrennt sind, mit mindestens einem Aldehyd, insbesondere Formaldehyd oder einem der oben genannten enolisierbaren Aldehyde. Besonders geeignet sind 2-Methylpropanal und 2-Ethylhexanal. Als Hydroxyamin geeignet sind insbesondere Diethanolamin und Diisopropanolamin, die zu Hydroxyoxazolidinen führen, aus welchen leicht Polyoxazolidine hergestellt werden können, beispielsweise durch Umsetzung mit einem Polyisocyanat oder einem Polyester.

Geeignete kommerzielle Oxazolidine sind beispielsweise Härter OZ und Desmophen^{®} VP LS 2959 (von Bayer), Zoldine^{®} ZA-78 und Zoldine^{®} ZE (von Dow Chemical), Zoldine^{®} RD-4 und Zoldine^{®} RD-20 (von Angus Chemie), sowie Incozol^{®} 2, Incozol^{®} 3, Incozol^{®} LV, Incozol^{®} 4, Incozol^{®} HP, Incozol^{®} CF, Incozol^{®} NC und Incozol^{®} K (von Incorez).

In einer bevorzugten Ausführungsform des erfindungsgemässen Klebesystems handelt es sich beim Kleb- oder Dichtstoff um einen Polyurethankleb- oder Dichtstoff, welcher Isocyanatgruppen aufweisende Polyurethanpolymere enthält, wobei dieser eine Verbindung **V** in hydrolytisch freisetzbarer Form enthält. Als Verbindungen, welche die Verbindung **V** nach der Hydrolyse freisetzen, sind Polyaldimine, Polyenamine und Polyoxazolidine meist bevorzugt.

Diese bevorzugte Ausführungsform ist besonders vorteilhaft, da durch den Einsatz eines geeigneten Polyaldimins im Kleb- oder Dichtstoff, dieser durch Kontakt mit Wasser eine Verbindung **V** verzögert freisetzt, welche die Beständigkeit des Haftverbunds bei feuchtwarmen Bedingungen gewährleistet. Durch die verzögerte Freisetzung der Verbindung **V** ist eine ungestörte Aushärtung des Epoxid-Festharzes mit dem Polyamin gewährleistet. Gleichzeitig mit der Freisetzung der Verbindung **V** wird ein Polyamin bzw. ein Aminoalkohol freigesetzt, welches durch Reaktion der Aminogruppen bzw. Hydroxylgruppen mit den Isocyanatgruppen des Polyurethanpolymers zu einer Aushärtung des Polyurethankleb- oder Dichtstoffs führt.

Weiterhin betrifft die vorliegende Erfindung ein Verfahren zur Anwendung eines erfindungsgemässen Klebesystems umfassend die Schritte:
i) Applikation einer Haftvermittlerzusammensetzung enthaltend
   - mindestens eine wässrige Dispersion eines Epoxid-Festharzes; und
   - mindestens ein Polyamin;
      auf ein Substrat;
ii) Applikation eines Kleb- oder Dichtstoffs enthaltend
   - mindestens eine Verbindung **V** in freier oder hydrolytisch freisetzbarer Form, welche mit dem Polyamin eine Kondensationsreaktion eingehen kann; zumindest teilweise auf die Stelle, auf welche die Haftvermittlerzusammensetzung appliziert wurde.

Die Verwendung eines derartigen Klebesystems verbessert die Haftung des Kleb- oder Dichtstoffs bei feuchtwarmen Bedingungen, insbesondere nach Kataplasma-Lagerung.

Im vorhergehend beschriebenen Verfahren erfolgt die Applikation der Haftvermittlerzusammensetzung typischerweise mittels Tuch, Filz, Rolle, Sprühen, Schwamm, Pinsel, Tauchbeschichten oder dergleichen und kann sowohl manuell als auch mittels Roboter erfolgen.

Handelt es sich bei der Haftvermittlerzusammensetzung um eine zweikomponentige Haftvermittlerzusammensetzung, erfolgt vor oder während der Applikation das Mischen der beiden Komponenten.

Nach der Applikation der Haftvermittlerzusammensetzung und vor der Applikation des Kleb- oder Dichtstoffs erfolgt üblicherweise das Ablüften der Haftvermittlerzusammensetzung. Das Ablüften kann unter atmosphärischen Bedingungen oder allenfalls bei erhöhter Temperatur, Unterdruck und/oder durch Anblasen mit einem Gas erfolgen, was zu einer Verkürzung der Ablüftzeit führen kann.

Der Kleb- oder Dichtstoff wird danach mittels einer geeigneten Vorrichtung zumindest teilweise auf die Stelle, auf welche die Haftvermittlerzusammensetzung appliziert wurde, auf das Substrat aufgetragen, bevorzugt in Form einer Raupe.

Das erfindungsgemässe Klebesystem eignet sich für verschiedenartige Substrate wie beispielsweise Metalle und Legierungen, insbesondere Stähle, Aluminium und Buntmetalle sowie deren Legierungen, Beton, Mörtel, Backstein, Klinker, Naturstein, Glas, Glaskeramik, Holz und Kunststoffe wie Polystyrol. Als Substrate bevorzugt sind anorganische Substrate, insbesondere Glas und Glaskeramik sowie Beton und Mörtel.

Die Substrate können bei Bedarf vor dem Applizieren der Haftvermittlerzusammensetzung vorbehandelt werden. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösemitteln.

Bevorzugte Anwendungsgebiete des erfindungsgemässen Klebesystems liegen in der Bau- und Fertigungsindustrie sowie im Fahrzeugbau, insbesondere zur Fugenabdichtung, Parkettverklebung, Anbauteilverklebung, Nahtabdichtung, Hohlraumversiegelung, Montage, Karosserieverklebung, Scheibenverklebung und dergleichen.

Artikel, welche aus dem Verkleben, Abdichten oder Beschichten eines Substrats unter Verwendung eines erfindungsgemässen Klebesystems hervorgehen, sind beispielsweise Bauwerke, insbesondere Bauwerke des Hoch- oder Tiefbaus, Transportmittel, beispielsweise Fahrzeuge, insbesondere Automobile, Busse, Lastkraftwagen, Schienenfahrzeuge oder Schiffe, oder Anbauteile davon. Bevorzugt wird das erfindungsgemässe Klebesystem eingesetzt für elastische Verklebungen im Fahrzeugbau, wie beispielsweise das Ankleben von Teilen, wie Kunststoffabdeckungen, Zierleisten, Flansche, Stossstangen, Führerkabinen oder andere Anbauteile, an die lackierte Karosserie eines Transportmittels, oder das Einkleben von Scheiben in die Karosserie.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Herstellung der Haftvermittlerzusammensetzung

Als Komponente **K1** wurde mit Ancarez™ AR555 (von Air Products; 55 Gew.-% Festkörpergehalt) eine kommerzielle wässrige Dispersion eines Epoxid-Festharzes eingesetzt.

Als Komponente **K2** wurde mit Anquamine^{®} 419 (von Air Products; 60 Gew.-% Festkörpergehalt) ein kommerzieller wässriger Aminhärter eingesetzt, der mit deionisiertem Wasser auf einen Festkörpergehalt von 17 Gew.-% verdünnt wurde.

### Herstellung der Klebstoffe

### Klebstoff 1:

In einem Vakuummischer wurden unter Feuchtigkeitsausschluss 500 g des kommerziellen einkomponentigen Polyurethanklebstoffs Sikaflex^{®}-221 (von Sika Schweiz AG) mit 5.5 g N,N-Diethyl-acetoacetamid zu einer homogenen Paste verarbeitet, diese unverzüglich in eine innenlackierte Aluminium-Kartusche abgefüllt und die Kartusche luftdicht verschlossen.

### Klebstoff 2:

In einem Vakuummischer wurden unter Feuchtigkeitsausschluss 500 g des kommerziellen einkomponentigen Polyurethanklebstoffs Sikaflex^{®}-221 (von Sika Schweiz AG) mit 12.0 g eines Dialdimins (hergestellt aus 51 g 2,2-Dimethyl-3-lauroyloxy-propanal und 10 g 1,6-Hexandiamin) und 0.5 g Benzoesäure zu einer homogenen Paste verarbeitet, diese unverzüglich in eine innenlackierte Aluminium-Kartusche abgefüllt und die Kartusche luftdicht verschlossen.

### Herstellung von Verklebungen

Zur Applikation der Haftvermittlerzusammensetzung wurden 50 Gewichtsteile der Komponente **K1** und 50 Gewichtsteile der Komponente **K2** zusammengemischt, die Mischung mittels eines damit getränkten Filzes auf das Substrat (Floatglas von Rocholl GmbH, Deutschland; Zinnseite) aufgetragen und während 60 Minuten im "Normklima" (23±1°C, 50±5% relative Luftfeuchtigkeit) abgelüftet.

Auf das so vorbehandelte Substrat wurde der jeweilige Klebstoff gemäss Tabelle 1 mittels einer Kartuschenpistole als Dreiecksraupe im Normklima aufgetragen. Der Klebstoff wurde nach einer Aushärtezeit von 7 Tagen im Normklima ("RT") sowie nach einer anschliessenden Kataplasma-Lagerung von 7 Tagen ("CP") auf Haftung geprüft.

Die Haftung des Klebstoffs wurde mittels Raupentest bestimmt. Hierbei wird die Raupe am Ende knapp über der Klebefläche eingeschnitten. Das eingeschnittene Ende der Raupe wird mit einer Rundzange festgehalten und vom Untergrund gezogen. Dies geschieht durch vorsichtiges Aufrollen der Raupe auf die Zangenspitze, sowie Plazieren eines Schnittes senkrecht zur Raupenziehrichtung bis auf den blanken Untergrund. Die Raupenabziehgeschwindigkeit ist so zu wählen, dass ca. alle 3 Sekunden ein Schnitt gemacht werden muss. Die Teststrecke muss mindestens 8 cm entsprechen. Beurteilt wird der nach dem Abziehen der Raupe auf dem Untergrund zurückbleibende Klebstoff (Kohäsionsbruch). Die Bewertung der Hafteigenschaften erfolgt durch visuelle Bestimmung des kohäsiven Anteils der Haftfläche in Prozenten. Der Zusatz "P" in der Wertung bezeichnet dabei eine Ablösung des Haftvermittlers bzw. Primers vom Untergrund oder einen kohäsiven Bruch im Haftvermittler. Je höher der Anteil an kohäsivem Bruch im Klebstoff ist, umso besser wird die Verklebung eingeschätzt. Testresultate mit Kohäsionsbrüchen von weniger als 50%, insbesondere weniger als 40%, gelten als ungenügend. Die Ergebnisse sind in der Tabelle 1 angegeben.

**Tabelle 1. Haftungsergebnisse**

| Klebstoff | Haftung nach RT | Haftung nach CP |
|---|---|---|
| Sikaflex^{®}-221 (Ref.) | 100 | 0P |
| Klebstoff 1 | 100 | 90P |
| Klebstoff 2 | 100 | 100 |

## Patentansprüche

1. Klebesystem umfassend
eine Haftvermittlerzusammensetzung enthaltend
- mindestens eine wässrige Dispersion eines Epoxid-Festharzes; und
- mindestens ein Polyamin;
sowie
einen Kleb- oder Dichtstoff enthaltend
- mindestens eine Verbindung **V** in freier oder hydrolytisch freisetzbarer Form, welche mit dem Polyamin eine Kondensationsreaktion eingehen kann.

2. Klebesystem gemäss Anspruch 1, **dadurch gekennzeichnet, dass** die wässrige Dispersion eines Epoxid-Festharzes einen Gehalt an Epoxid-Festharz von 30 bis 80 Gew.-% aufweist.

3. Klebesystem gemäss einem der Ansprüche 1 oder 2, **dadurch gekennzeichnet, dass** die mittlere Teilchengrösse der dispergierten Partikel aus Epoxid-Festharz in der Dispersion im Bereich von 0.05 bis 20 µm liegt.

4. Klebesystem gemäss einem der vorhergehenden Ansprüche, **dadurch gekennzeichnet, dass** der Anteil der wässrigen Dispersion eines Epoxid-Festharzes 30 bis 99 Gew.-% bezogen auf die gesamte Haftvermittlerzusammensetzung beträgt.

5. Klebesystem gemäss einem der vorhergehenden Ansprüche, **dadurch gekennzeichnet, dass** die Haftvermittlerzusammensetzung eine zweikomponentige Haftvermittlerzusammensetzung ist, bestehend aus einer ersten Komponente **K1** enthaltend
- mindestens eine wässrige Dispersion eines Epoxid-Festharzes; und
einer zweiten Komponente **K2** enthaltend
- mindestens ein Polyamin.

6. Klebesystem gemäss einem der vorhergehenden Ansprüche, **dadurch gekennzeichnet, dass** die Verbindung **V** in hydrolytisch freisetzbarer Form im Kleb- oder Dichtstoff enthalten ist.

7. Klebesystem gemäss Anspruch 6, **dadurch gekennzeichnet, dass** die Verbindung, welche die Verbindung **V** nach der Hydrolyse freisetzt, ein Polyaldimin ist.

8. Klebesystem gemäss einem der vorhergehenden Ansprüche, **dadurch gekennzeichnet, dass** es sich beim Kleb- oder Dichtstoff um einen Polyurethankleb- oder Dichtstoff handelt, welcher Isocyanatgruppen aufweisende Polyurethanpolymere enthält.

9. Klebesystem gemäss einem der vorhergehenden Ansprüche, **dadurch gekennzeichnet, dass** der Polyurethankleb- oder Dichtstoff, welcher Isocyanatgruppen aufweisende Polyurethanpolymere enthält, bei Raumtemperatur applizierbar ist und bei Raumtemperatur aushärten kann.

10. Verfahren zur Anwendung eines Klebesystems gemäss einem der Ansprüche 1 bis 9 umfassend die Schritte:
i) Applikation einer Haftvermittlerzusammensetzung enthaltend
- mindestens eine wässrige Dispersion eines Epoxid-Festharzes; und
- mindestens ein Polyamin;
auf ein Substrat;
ii) Applikation eines Kleb- oder Dichtstoffs enthaltend
- mindestens eine Verbindung **V** in freier oder hydrolytisch freisetzbarer Form, welche mit dem Polyamin eine Kondensationsreaktion eingehen kann;
zumindest teilweise auf die Stelle, auf welche die Haftvermittlerzusammensetzung appliziert wurde.

## Claims

1. An adhesive system, comprising
a bonding agent composition containing
- at least one aqueous dispersion of a solid epoxy resin; and
- at least one polyamine;
and
an adhesive or sealant containing
- at least one compound **V** in free or hydrolytically releasable form, which can react with the polyamine in a condensation reaction.

2. The adhesive system according to claim 1, **characterized in that** the aqueous dispersion of a solid epoxy resin has a content of solid epoxy resin of 30 to 80 wt-%.

3. The adhesive system according to one of claims 1 or 2, **characterized in that** the mean particle size of the dispersed particles of solid epoxy resin in the dispersion is in the range of 0.05 to 20 µm.

4. The adhesive system according to one of the preceding claims, **characterized in that** the proportion of the aqueous dispersion of a solid epoxy resin is 30 to 99 wt -%, based on the total bonding agent composition.

5. The adhesive system according to one of the preceding claims, **characterized in that** the bonding agent composition is a two-component bonding agent composition consisting of a first component **K1** containing
- at least one aqueous dispersion of a solid epoxy resin;
and
a second component **K2** containing
- at least one polyamine.

6. The adhesive system according to one of the preceding claims, **characterized in that** the compound **V** is contained in the adhesive or sealant in hydrolytically releasable form.

7. The adhesive system according to claim 6, **characterized in that** the compound which releases compound **V** after hydrolysis is a polyaldimine.

8. The adhesive system according to one of the preceding claims, **characterized in that** the adhesive or sealant is a polyurethane adhesive or sealant containing polyurethane polymers having isocyanate groups.

9. The adhesive system according to one of the preceding claims, **characterized in that** the polyurethane adhesive or sealant, which contains polyurethane polymers having isocyanate groups, can be applied at room temperature and can cure at room temperature.

10. A process for using an adhesive system according to any one of claims 1 to 9, comprising the steps of:
i) applying a bonding agent composition containing
- at least one aqueous dispersion of a solid epoxy resin; and
- at least one polyamine;
to a substrate;
ii) applying an adhesive or sealant containing
- at least one compound **V** in free or hydrolytically releasable form, which can react with the polyamine in a condensation reaction;
at least partially to the site at which the bonding agent composition was applied.

## Revendications

1. Système de collage comprenant :
une composition adhésive contenant :
- au moins une dispersion aqueuse d'une résine époxyde solide ; et
- au moins une polyamine ;
ainsi que :
un matériau adhésif ou étanche contenant :
- au moins un composé **V** sous forme libre ou libérable par voie hydrolytique, qui peut effectuer une réaction de condensation avec la polyamine.

2. Système de collage selon la revendication 1, **caractérisé en ce que** la dispersion aqueuse d'une résine époxyde solide présente une teneur en résine époxyde solide de 30 à 80 % en poids.

3. Système de collage selon l'une quelconque des revendications 1 ou 2, **caractérisé en ce que** la taille particulaire moyenne des particules de résine époxyde solide dans la dispersion se situe dans la plage de 0,05 à 20 µm.

4. Système de collage selon l'une quelconque des revendications précédentes, **caractérisé en ce que** la fraction de la dispersion aqueuse d'une résine époxyde solide est de 30 à 99 % en poids par rapport à la composition adhésive totale.

5. Système de collage selon l'une quelconque des revendications précédentes, **caractérisé en ce que** la composition adhésive est une composition adhesive à deux composants constituée d'un premier composant **K1** contenant :
- au moins une dispersion aqueuse d'une résine
époxyde solide ; et
d'un second composant **K2** contenant :
- au moins une polyamine.

6. Système de collage selon l'une quelconque des revendications précédentes, **caractérisé en ce que** le composé **V** est contenu sous forme libérable par voie hydrolytique dans le matériau adhésif ou étanche.

7. Système de collage selon la revendication 6, **caractérisé en ce que** le composé qui libère le composé **V** après l'hydrolyse est une polyaldimine.

8. Système de collage selon l'une quelconque des revendications précédentes, **caractérisé en ce que** la matériau adhésif ou étanche est un matériau adhésif ou étanche de polyuréthane, qui contient des polymères de polyuréthane présentant des groupements isocyanate.

9. Système de collage selon l'une quelconque des revendications précédentes, **caractérisé en ce que** le matériau adhésif ou étanche de polyuréthane, qui contient des polymères de polyuréthane présentant des groupements isocyanate, peut être appliqué(e) à température ambiante et peut durcir à température ambiante.

10. Procédé d'utilisation d'un système de collage selon l'une quelconque des revendications 1 à 9, comprenant les étapes consistant à :
i) appliquer une composition adhésive contenant :
- au moins une dispersion aqueuse d'une résine époxyde solide ; et
- au moins une polyamine ;
sur un substrat ;
ii) appliquer un matériau adhésif ou étanche contenant :
- au moins un composé **V** sous forme libre ou libérable par voie hydrolytique, qui peut effectuer une réaction de condensation avec la polyamine
au moins en partie à l'emplacement sur lequel la
composition adhésive a été appliquée.
